# FASCICULE DE BREVET EUROPEEN

(11) **EP 1 813 792 B1**
(45) Date de publication et mention de la délivrance du brevet: **02.12.2015**
(21) Numéro de dépôt: 07101179.5
(22) Date de dépôt: 25.01.2007
(51) Int. Cl.: F02C 7/36, F01D 5/02, F01D 25/16, F16C 35/073, F16D 1/06

(54) **Système de liaison d'arbre moteur avec écrou escamotable**
System zur Verbindung einer Motorwelle mit einer Versenkmutter
Engine shaft linking system with retractable nut

(30) Priorité: 30.01.2006 FR 0650317
(43) Date de publication de la demande: 01.08.2007
(73) Titulaire: SNECMA, 75015 Paris (FR)
(72) Inventeur: Servant, Régis, 91270 Vigneux Sur Seine (FR)
(74) Mandataire: David, Daniel

(56) Documents cités:
- EP-A1- 0 987 457
- EP-A1- 1 498 624
- FR-A1- 2 633 023
- GB-A- 2 088 015
- US-A- 2 738 125
- US-A- 3 602 535

## Description

La présente invention se rapporte à un moteur à turbine à gaz, en particulier dans le domaine aéronautique, et vise le montage d'un arbre de rotor à l'intérieur du moteur.

Les opérations de montage et de démontage d'un turbomoteur sont délicates, en raison du nombre de pièces qui les composent et des faibles jeux entre elles alors que les dimensions peuvent être importantes. Le coût des interventions sur le moteur comportant de telles opérations est de ce fait toujours élevé. On cherche donc en permanence à les simplifier. Dans un moteur à turbosoufflante avant et à double corps, comme le moteur cfm56, l'accès au palier support de l'arbre du compresseur haute pression est particulièrement difficile car il est monté, au niveau du carter intermédiaire, en arrière de la soufflante et des deux premiers paliers supportant respectivement l'arbre du compresseur basse pression et celui de la soufflante. Le carter intermédiaire est la partie du carter de la machine qui supporte notamment les paliers avant des rotors. Afin d'éviter le démontage de toute la partie avant du moteur et de la soufflante en particulier, les éléments de ce palier sont agencés actuellement de manière à permettre le montage par l'arrière. Une telle solution est avantageuse mais présente encore quelques inconvénients qu'il serait souhaitable d'éliminer.

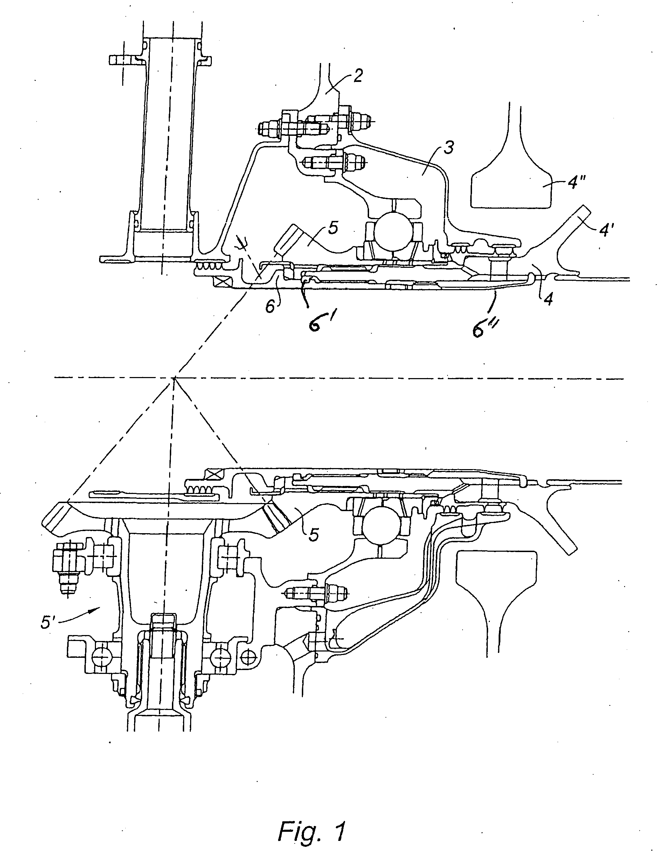

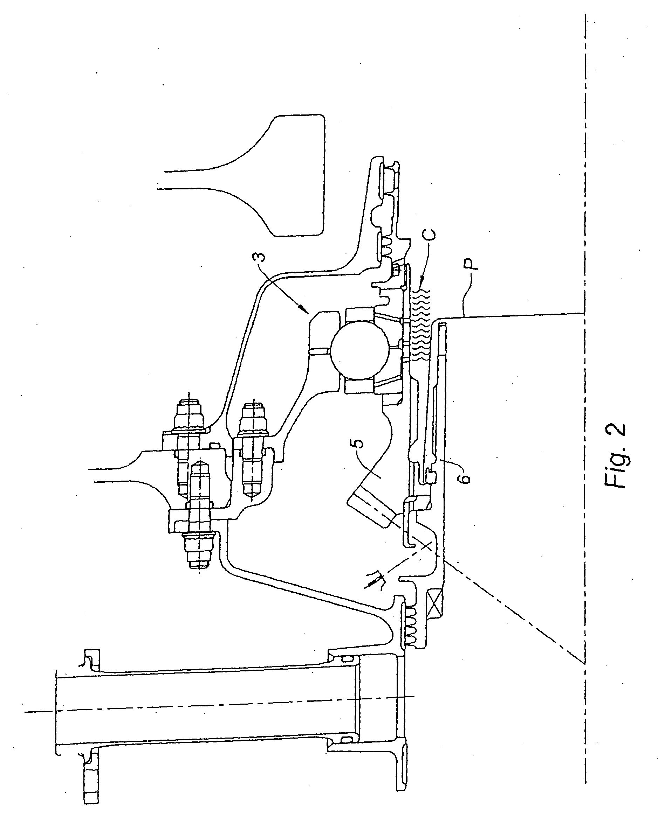

En référence aux figures 1 et 2, on rappelle une solution correspondant à l'enseignement de l'art antérieur. L'ensemble du moteur n'est pas représenté, seul l'environnement immédiat du palier est visible. L'avant et l'arrière sont définis par rapport à la direction d'avance du moteur. On voit une partie de la structure fixe du carter intermédiaire 2, le palier 3 à billes de l'arbre du compresseur HP, est supporté par sa bague extérieure dans cette structure fixe. Le palier supporte en rotation l'extrémité avant de l'arbre 4 du compresseur HP dont on voit le tourillon 4' et un disque de rotor 4". Le palier supporte à l'avant un pignon conique 5 qui entraîne le pignon 5' lié à un arbre radial et formant la boîte à engrenages dite IGB à partir de laquelle des équipements auxiliaires sont entraînés : pompes, générateurs de courant électriques ou autres. Le pignon conique engrène dans ce but avec le pignon de l'arbre de transmission radial qui est logé dans l'un des bras radiaux du carter intermédiaire pour entraîner les pignons de la boîte à engrenages des auxiliaires, connue sous le sigle AGB (pour accessory gear box). Le pignon conique est solidaire du manchon cylindrique supporté par le palier.

Pour maintenir l'arbre 4 dans le palier 3, on prévoit conformément à l'art antérieur un écrou 6 qui est retenu à l'intérieur du pignon 5, à l'amont par un segment ou jonc 6'. L'écrou comprend un filetage sur sa surface externe par lequel il est vissé à l'intérieur de l'extrémité amont de l'arbre 4, pourvue d'un filetage approprié. Un frein d'écrou 6" immobilisé en rotation par des cannelures axiales dans l'arbre 4, et dont les pattes flexibles viennent se bloquer dans une gorge circulaire de l'arbre 4, empêche l'écrou de se desserrer accidentellement. Par ailleurs des cannelures axiales sur la paroi interne du manchon du pignon 5 coopèrent avec des cannelures sur la surface externe de l'arbre 4 pour empêcher toute rotation de l'un par rapport à l'autre. Ce montage intègre la fonction d'auto extraction du compresseur HP. La fonction est assurée par le segment qui solidarise axialement l'écrou de palier à la roue conique. Ainsi en vissant l'écrou dans le filetage de l'arbre du compresseur HP, on accoste le compresseur sur le palier ; inversement en dévissant l'écrou on repousse le compresseur vers l'arrière car l'écrou est bloqué axialement par le segment.

Sur la figure 2, on voit le palier avant montage de l'arbre 4. L'écrou, disposé à l'avant du palier est monté préalablement sur le pignon avant tout montage des éléments par l'arrière du carter intermédiaire. Pour préparer le montage de l'arbre 4, on est amené à chauffer en C le palier 3 afin de le dilater et minimiser les efforts de frettage. Pour éviter de chauffer l'écrou 6 et minimiser les frottements dans le filetage lorsqu'on va le serrer sur l'arbre 4, on dispose une protection thermique P autour de l'écrou. Cependant cette protection est délicate à mettre en oeuvre. Elle ne peut pas être installée de manière efficace.

La demande EP0987457 décrit un agencement de retenu d'un palier de bout d'arbre comprenant une butée, un écrou de serrage et une pièce de freinage en réduisant les intervention manuelles préliminaires destinées à dégager ces pièces, afin de pouvoir séparer le palier du bout d'arbre qu'il soutient.

Le brevet FR2633023 décrit un dispositif d'accouplement d'un arbre de turbine sur le tourillon de turbine pour permettre le centrage de l'arbre et son entraînement en rotation. Le dispositif comporte un écrou pré-monté sur le tourillon au moyen d'un filetage vissé à l'intérieur d'un taraudage du tourillon et ledit écrou comporte un second filetage de diamètre plus faible que le premier filetage étant apte à coopérer avec un taraudage de l'arbre de turbine pour assurer l'accouplement de l'arbre sur le tourillon.

La demanderesse s'est fixé comme objectif d'éviter les problèmes liés à ce montage.

Plus particulièrement, le problème à résoudre concerne un type de liaison entre le compresseur HP et l'IGB moteur permettant le montage et le démontage du compresseur HP avec accès unique des outillages par l'arrière moteur.

L'invention concerne un système de fixation comprenant un arbre d'un moteur à turbine à gaz, un manchon, l'extrémité de l'arbre étant engagée à l'intérieur du manchon, le manchon étant supporté par le palier, et un écrou, ledit écrou étant vissé à une extrémité à l'intérieur dudit manchon, est caractérisé par le fait que l'écrou est lié au moyen d'un jonc circulaire fendu avec l'arbre, à l'autre extrémité.

L'invention concerne également un procédé de montage d'un arbre de compresseur HP d'un turbomoteur à double corps dans son palier avant, utilisant un tel système de fixation, le procédé comprenant le chauffage du palier, le montage de l'écrou et du jonc circulaire fendu élastique sur l'arbre, l'introduction de l'ensemble arbre, écrou et jonc à l'intérieur du manchon, puis le vissage d'une extrémité de l'écrou à l'intérieur du manchon et la liaison de l'autre extrémité de l'écrou avec l'arbre à travers le jonc.

La solution de l'invention convient ainsi au montage de l'arbre du compresseur HP d'un moteur à double corps dont la prise de puissance pour entraîner le boîtier à engrenage des machines est assurée par un pignon conique solidaire de celui-ci, le manchon appartenant à ce pignon conique d'entraînement.

La solution de l'invention permet grâce à la liaison du type à segment d'escamoter l'écrou à l'intérieur de l'arbre pendant l'accostage de l'arbre sur le palier puis par un simple déplacement axial de l'écrou commandé par un outil situé en, arrière et à distance de mettre l'écrou en butée contre le filetage avant du manchon et de visser l'écrou pour assurer la fixation. Le démontage du compresseur HP est effectué également de façon simple, en intervenant uniquement par l'arrière du moteur, et n'est pas remis en cause par les outillages et moyens de montage utilisé couramment.

Le montage / démontage par l'arrière du moteur est un avantage très important pour ce type de moteur et réduit de façon très importante le coût d'un tel démontage.

De plus la solution est compacte, elle s'insère dans l'espace disponible et n'interfère pas avec la circulation d'air entre l'IGB et l'arbre BP.

On décrit maintenant l'invention plus en détail, en référence aux dessins joints en annexes sur lesquels :
La figure 1 représente en coupe axiale une vue partielle d'une solution de montage correspondant à l'enseignement de l'art antérieur ;
La figure 2 montre les éléments de la figure 1 pré assemblés et avant le montage de l'arbre du compresseur HP ;
La figure 3 représente en demi coupe axiale une vue partielle d'un système de fixation de l'extrémité de l'arbre du compresseur HP selon l'invention ;
La figure 4 montre la première étape du montage de l'extrémité amont de l'arbre du compresseur HP ;
La figure 5 montre la première étape du montage vue côté de l'arbre du compresseur HP ;
La figure 6 montre la deuxième étape avec l'accostage de l'arbre du compresseur ;
La figure 7 montre l'engagement plus en avant de l'arbre du compresseur ;
La figure 8 montre que le vissage de l'écrou escamotable sur le manchon du palier est terminé et que l'on peut mettre en place le frein d'écrou tel que décrit en figure 3.

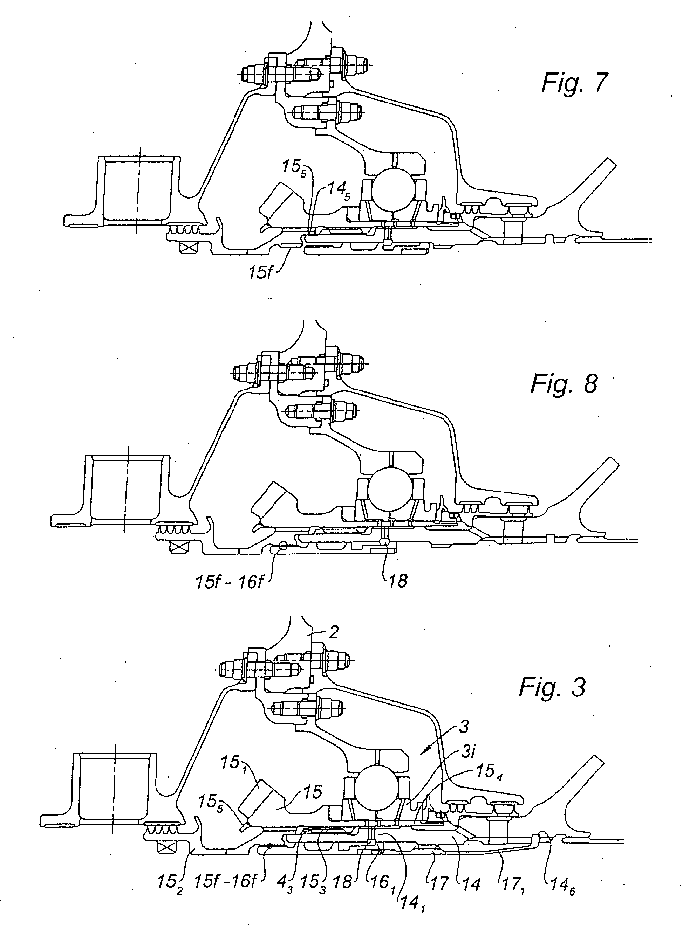

Aux figures 3 et suivantes, on a représenté un mode de réalisation de la solution de l'invention. Le palier 3 reste inchangé par rapport à l'art antérieur tout comme le carter intermédiaire 2. L'extrémité amont de l'arbre 14, formant tourillon et appartenant au rotor du compresseur HP d'un turbomoteur à double corps, comporte une rainure annulaire intérieure ou gorge 14₁, dans laquelle est logé un segment annulaire fendu 18 de section ici rectangulaire. Le segment 18 coopère avec une surface de butée axiale 16₁ ménagée sur la surface externe d'un écrou 16. Cet écrou 16 est de forme cylindrique et relie l'arbre 14 à une roue conique 15. La roue conique 15 comprend un pignon conique 15₁ pour l'entraînement de l'IGB. Elle comprend aussi un manchon cylindrique 15₄ fretté sur la bague intérieure 3i du palier 3. A l'avant, la roue 15 est solidaire ici d'un joint à labyrinthe 15₂. Des cannelures 15₃ sont ménagées à l'intérieur pour coopérer avec des cannelures 14₃ sur le tourillon 14 et les maintenir solidaires en rotation. La roue 15 comporte aussi une portion interne de surface cylindrique avec un filetage 15f avec lequel l'écrou cylindrique 16 coopère par l'intermédiaire d'un filetage 16f.

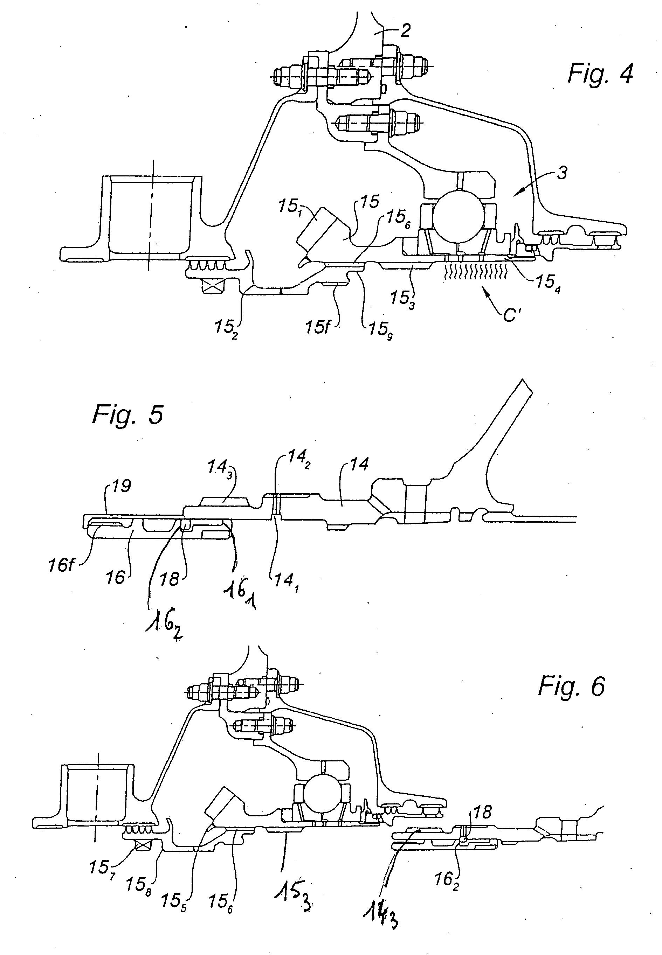

Sur la figure 4, on voit le palier 3 avec la roue conique 15 montée sur la bague 3i intérieure du palier 3 et un moyen de chauffage C' figuré par des traits ondulés.

On décrit maintenant, le montage avant de l'arbre du compresseur HP dans le palier 3, en relation avec les figures 4 et suivantes.

Le palier est déjà assemblé avec la roue conique 15 frettée à l'intérieur de la bague 3i du palier. La première étape consiste à chauffer le palier 3 en disposant une chaufferette sous la bague 3i. On perçoit déjà l'avantage de la solution de l'invention car en l'absence d'écrou aucun chauffage parasite ne vient altérer les pièces environnantes.

Parallèlement, on met en place l'écrou 16 sur l'arbre comme on le voit sur la figure 5. L'écrou 16 de forme générale cylindrique a un diamètre externe égal au diamètre interne de l'arbre 14. Il comprend en outre une gorge transversale 16₂ de profondeur suffisante pour que le segment 18 vienne s'y loger entièrement quand il est déformé par compression radiale et son diamètre réduit. Dans ce but, on a engagé un manchon 19 qui maintient le segment 18 rétracté. Le diamètre interne du manchon 19 est le même que le diamètre interne de l'arbre. De cette façon, comme on le voit sur la figure 5, en position rétractée le diamètre extérieur du segment lui permet de glisser à l'intérieur, le long de l'arbre 14. On glisse l'écrou jusqu'à ce que le segment 18 rencontre la gorge 14₁. A ce moment le segment par son élasticité reprend sa forme naturelle et vient se plaquer dans la gorge 14₁. La gorge 16₂ de l'écrou forme une butée axiale qui permet d'amener le segment jusqu'à la gorge 14₁ de l'arbre 14, et qui empêche l'écrou de s'enfoncer plus avant dans l'arbre 14. On observe que l'arbre comprend plusieurs orifices radiaux 14₂ au niveau de la gorge pour, lorsqu'on souhaite extraire l'écrou de l'arbre, appliquer un outil par lequel on peut rétracter le segment 18 dans la gorge 16₂ de l'écrou.

Sur la figure 6, on voit que l'on va engager l'arbre dans le palier dont on a enlevé la chaufferette et qui est à l'état dilaté. L'écrou 16 est escamoté et calé axialement dans l'arbre 14 par le segment 18 qui s'appuie à la fois dans la rainure 14₁ et contre la butée formée par la gorge 16₂.

Sur la figure 7 on a engagé complètement l'arbre dans le palier 3. Les cannelures 14₃ coopèrent avec les cannelures 15₃ du manchon de la roue conique 15 pour leur immobilisation en rotation. L'extrémité avant 14₅ de l'arbre est en butée contre la pièce formant labyrinthe arrière et s'appuyant sur la bague intérieure du roulement de palier 3. On observe aussi que la surface cylindrique extérieure de la portion d'extrémité de l'arbre 14 est engagée dans une surface interne de frettage de la roue 15. Cette disposition assure un soutien efficace du pignon 15₁ pour qu'il ne se déforme pas et tourne bien rond en fonctionnement.

Comme on le voit sur la figure 8 on a vissé l'écrou par engagement des filetage respectifs 15f de la roue conique 15 et 16f de l'écrou 16. Le vissage a été effectué au moyen d'un outil approprié depuis l'arrière de l'arbre 14. Ce vissage a été effectué jusqu'à ce que la surface de butée 16₁ de l'écrou vienne en appui contre le segment 18 logé dans la gorge 14₁

En revenant à la figure 3, on voit que l'arbre est maintenant en butée contre les différents épaulements internes de la roue conique. Un frein d'écrou 17 a été mis en place. Il coopère avec l'écrou 16 par des encoches pour l'empêcher de tourner par rapport à l'arbre. Il comporte des branches 17₁ déformables élastiquement qui viennent se loger dans une gorge 14₆ ménagée dans l'arbre 14. On observe la présence de la partie avant 15₂ de la roue conique qui forme avec une écope 15₅ une surface de réception d'huile de lubrification du pignon 15₁ et du palier 3. La buse de distribution d'huile n'est pas représentée. Cette huile recueillie par l'écope 15₅ est guidée à travers des canaux longitudinaux 15₆, entre les cannelures 15₃ et quelques cannelures 14₃ arasées spécialement, vers le palier 3 qui est pourvu d'orifices appropriés et connus de lubrification des billes.

L'écrou 16 peut être désigné d'escamotable dans la mesure où il est escamoté dans l'arbre 14. On entraîne l'écrou en rotation par des outils connus à travers l'arbre depuis l'arrière notamment. Pour éviter que des efforts ne transitent par le palier on peut brider axialement la roue conique au moyen d'un outil approprié que l'on place par exemple dans une zone de bridage axial ménagée entre des tenons 15₇ réalisés à l'avant de la roue pour bloquer toute rotation pendant le montage et un épaulement 15₈.

## Revendications

1. Système de fixation comprenant un arbre (14) d'un moteur à turbine à gaz, un manchon (15), l'extrémité de l'arbre étant engagée à l'intérieur du manchon (15), un palier (3), le manchon étant supporté par le palier (3), et un écrou (16), ledit écrou étant vissé à une extrémité à l'intérieur dudit manchon (15), **caractérisé par le fait que** l'écrou est lié au moyen d'un jonc circulaire fendu (18) avec l'arbre, à l'autre extrémité.

2. Système selon la revendication 1 dont l'écrou (16) est de forme cylindrique et comprend une gorge (16₂) extérieure de profondeur suffisante pour contenir le segment en position rétractée.

3. Système selon la revendication 2 dont l'écrou comprend une surface (16₁) formant arrêt axial pour le segment, distincte de la gorge (16₂).

4. Système selon la revendication 3 dont le segment est logé sur une partie de sa hauteur dans une gorge (14₁) ménagée dans la surface interne du manchon (15) quand le segment (18) est en appui contre la dite surface formant arrêt (16₁).

5. Système selon l'une des revendications précédentes comprenant un frein d'écrou (17).

6. Système selon l'une des revendications précédentes dont l'arbre (14) et le manchon (15) sont guidés l'un dans l'autre par des cannelures (15₃, 14₃) axiales.

7. Système selon l'une des revendications précédentes dont l'arbre (14) est l'arbre du compresseur HP d'un moteur à turbine à gaz à double corps, le manchon étant la roue conique (15) d'entraînement de l'arbre de transmission de la boîte à engrenage des accessoires.

8. Système selon la revendication précédente dont la roue conique (15) comprend un moyen pour brider le palier axialement pendant le vissage de l'écrou.

9. Procédé de montage d'un arbre (14) de compresseur HP d'un turbomoteur à double corps dans son palier (3) avant, utilisant un système de fixation selon l'une des revendications précédentes, le procédé comprenant le chauffage du palier (3), le montage de l'écrou (16) et du jonc circulaire fendu (18) sur l'arbre (14), l'introduction de l'ensemble arbre (14), écrou (16) et jonc (18) à l'intérieur du manchon (15), puis le vissage d'une extrémité (16_{f}) de l'écrou à l'intérieur du manchon (15) et la liaison de l'autre extrémité (16₁) de l'écrou avec l'arbre (14) à travers le jonc (18).

10. Compresseur de moteur à turbine à gaz comprenant un système de fixation de son arbre selon l'une des revendications 1 à 8 .

11. Moteur à turbine à gaz comprenant un système de fixation de l'arbre de compresseur selon l'une des revendications 1 à 8 .

## Patentansprüche

1. Befestigungssystem, das eine Welle (14) eines Gasturbinenmotors, eine Muffe (15), wobei das Ende der Welle in Innern der Muffe (15) eingreift, ein Lager (3), wobei die Muffe von dem Lager (3) getragen wird, und eine Mutter (16) umfasst, wobei die Mutter an einem Ende im Innern der Muffe (15) geschraubt ist, **dadurch gekennzeichnet, dass** die Mutter mittels eines geschlitzten kreisrunden Rings (18) mit der Welle am anderen Ende verbunden ist.

2. System nach Anspruch 1, wobei die Mutter (16) zylindrisch geformt ist und eine äußere Nut (16₂) mit einer Tiefe umfasst, die ausreichend ist, um das Segment in eingezogener Position zu enthalten.

3. System nach Anspruch 2, wobei die Mutter eine Fläche (16₁) umfasst, die für das Segment axialen Stopp bildet, die sich von der Nut (16₂) unterscheidet.

4. System nach Anspruch 3, wobei das Segment über einen Teil seiner Höhe in einer in der inneren Fläche der Muffe (15) ausgebildeten Nut (14₁) untergebracht ist, wenn sich das Segment (18) auf der den Stopp bildenden Fläche (16₁) abstützt.

5. System nach einem der vorangehenden Ansprüche, das eine Mutternsicherung (17) umfasst.

6. System nach einem der vorangehenden Ansprüche, wobei die Welle (14) und die Muffe (15) von axialen Rillen (15₃, 14₃) ineinander geführt sind.

7. System nach einem der vorangehenden Ansprüche, wobei die Welle (14) die Welle des Hochdruck-Kompressors eines Gasturbinenmotors mit doppeltem Körper ist, wobei die Muffe das konische Antriebsrad (15) der Übertragungswelle des Getriebes des Zubehörs ist.

8. System nach vorangehendem Anspruch, wobei das konische Rad (15) ein Mittel umfasst, um das Lager beim Schrauben der Mutter axial zu flanschen.

9. Montageverfahren einer Welle (14) eines Hochdruck-Kompressors eines Turbomotors mit doppeltem Körper in seinem vorderen Lager (3) bei Verwendung eines Befestigungssystems nach einem der vorangehenden Ansprüche, wobei das Verfahren das Erwärmen des Lagers (3), die Montage der Mutter (16) und des geschlitzten kreisrunden Rings (18) auf der Welle (14), das Einsetzen der Einheit Welle (14), Mutter (16) und Ring (18) in das Innere der Muffe (15), gefolgt vom Verschrauben eines Endes (16_{f}) der Mutter im Innern der Muffe (15) und der Verbindung des anderen Endes (16₁) der Mutter mit der Welle (14) durch den Ring (18), umfasst.

10. Kompressor eines Gasturbinenmotors, umfassend ein Befestigungssystem seiner Welle nach einem der Ansprüche 1 bis 8.

11. Gasturbinenmotor, der ein Befestigungssystem der Welle des Kompressors nach einem der Ansprüche 1 bis 8 umfasst.

## Claims

1. Fastening system comprising a gas turbine engine shaft (14), a sleeve (15), the end of the shaft (14) being engaged inside the sleeve (15), a bearing (3), the sleeve being supported by the bearing (3), and a nut (16), said nut (16) being screwed at one end inside said sleeve (15), **characterized in that** the nut is connected by a circular split ring (18) with the shaft at the other end.

2. System according to claim 1 in which the nut (16) is of cylindrical shape and comprises an outer groove (16₂) of sufficient depth to contain the segment in the retracted position.

3. System according to claim 2 in which the nut comprises a surface (16₁) forming an axial stop for the segment, this surface being separate from the groove (16₂).

4. System according to claim 3 in which the segment is housed over part of its height in a groove (14₁) made in the internal surface of the sleeve (15) when the segment (18) bears against said stop-forming surface (16₁).

5. System according to one of the preceding claims, comprising a nut retainer (17).

6. System according to one of the preceding claims in which the shaft (14) and the sleeve (15) are guided one within the other by means of axial splines (15₃, 14₃).

7. System according to one of the preceding claims in which the shaft (14) is the HP compressor shaft of a twin-spool gas turbine engine, the sleeve being the bevel wheel (15) for driving the transmission shaft of the accessory gearbox.

8. System according to the preceding claim in which the bevel wheel (15) comprises a means for clamping the bearing axially during the screwing of the nut.

9. Method of mounting the HP compressor shaft (14) of a twin-spool turbine engine in its front bearing (3), using a fastening system according to one of the preceding claims, the method comprising the heating of the bearing (3), the mounting of the nut (16) and the circular split ring (18) on the shaft (14), the introduction of the shaft (14), nut (16) and ring (18) ensemble inside the sleeve (15), and the screwing of an end (16_{f}) of the nut inside the sleeve (15) and the linking of the other end (16₁) of the nut with the shaft (14) through the ring (18).

10. Gas turbine engine compressor comprising a system for fastening its shaft according to one of claims 1 to 8.

11. Gas turbine engine comprising a system for fastening the compressor shaft according to one of claims 1 to 8.
